(19) Europäisches Patentamt / European Patent Office / Office européen des brevets

(11) **EP 1 840 765 A1**

(12) **EUROPEAN PATENT APPLICATION**

(43) Date of publication:
**03.10.2007 Bulletin 2007/40**

(51) Int Cl.:
***G06F 17/30*** (2006.01)

(21) Application number: **06368002.9**

(22) Date of filing: **02.03.2006**

| | |
|---|---|
| (84) Designated Contracting States:<br>**AT BE BG CH CY CZ DE DK EE ES FI FR GB GR HU IE IS IT LI LT LU LV MC NL PL PT RO SE SI SK TR**<br>Designated Extension States:<br>**AL BA HR MK YU** | (72) Inventor: **Gutierrez, Michel**<br>**06130 Grasse (FR)**<br><br>(74) Representative: **Schuffenecker, Thierry**<br>**97, Chemin de Cassiopée**<br>**Domaine de l'étoile**<br>**06610 La Gaude (FR)** |
| (71) Applicant: **Indigen Solutions SARL**<br>**06904 Sophia Antipolis (FR)** | |

(54) **Process for extracting data from a web site**

(57)    A process for automatically analyzing a website comprising a plurality of pages hierarchically arranged and formalized in a markup language, said process comprising the steps of:
- constructing a sitemap representation of said web site, said sitemap including at least a root node associated with one page of said website,

- definition of a selection and selection rule for determining a set of links in pages;
- for each node comprised within said sitemap, discovering a set of links complying with said selection rule;
- using said discovering for determining new pages and for automatically creating, when appropriate, new nodes within said sitemap being associated with new pages of said web site.

Figure 2

**Description**

**Technical field of the invention**

The invention relates to telecommunications and the Internet network and more particularly to a process for analysing web sites and for facilitating migration of those.

**Background art**

The Internet - or intranet - network and the World Wide Web have been subject of a huge development. The web has become the basic and predominant way for publishing and disseminating information throughout the world and, today, no industrial nor business company or organization of any importance is developing its activities without elaborating a web site.

The generalization of Internet as a prominent tool for publishing and disseminating information throughout the world has resulted in the development of new companies specialized in web editing and providing development and maintenance services of web sites.

A common and heavy maintenance operation consists of changing the web site software platform, in order to acquire new functionalities or to enhance the ease-of-use or the accessibility of the site. This requires extracting content data from the pre-existing site to integrate into the new one.

In some situations, the owner of a web site wants to make the content data of his site, originally designed to be read by humans using HTML pages, available to software processors through *Web Services* or *Semantic Web* interfaces or technologies. This also requires extracting structured data from HTML sources in order to reformat them into a computer-processable framework.

Such work might become a burden when the size of the pre-existing web site extends over several thousands of HTML pages.

In such cases, there is a clear need for specialized tools for assisting web designers to automatically analyse the contents of pre-existing web sites for the purpose of achieving facilitated site migration, or data reorganisation.

**Summary of the invention**

It is an object of the present invention to improve the possibilities of automatic analysis of pages formalized in a markup language.

It is another object of the present invention to provide an analysis tool for a page formalized in markup language which can assist the user to achieve migration of a given web site.

It is an object of the present invention to provide a way to automatically process a large number of pages at the same time and keep manual adjustments to the minimum.

It is an object of the present invention to carry out a process for semiautomatically developing a site map comprising nodes which still has a limited size within the memory) ...

These objects are achieved by a process for automatically analyzing a website comprising a plurality of pages hierarchically arranged and formalized in a markup language, said process comprising the steps of:

- constructing a sitemap representation of said web site, said sitemap including at least a root node associated with one page of said website,
- definition of a selection rule for determining a set of links in pages;
- for each node comprised within said sitemap, discovering a set of links complying with said selection rule;
- using said discovering for determining new pages and for automatically creating, when appropriate, new nodes within said sitemap being associated with new pages of said web site.

In one particular embodiment, the selection rule is entered by the operator.

Preferably, the selection rule is automatically determined by the computer, particularly on the detection of alignment between links existing within a given page.

In one embodiment, the process is associated with a user interface which gives the operator the possibility to control, by drag-and-drop feature, the selection of links within a predefined area of the display.

More particular, the user interface comprises:

- a first area (zone 1) displaying the browsing of the considered website being analysed;
- a second area (zone 2) displaying the pages associated to the sitemap tree nodes.
- a third area (zone 3) using for creating selection rules, and which interacts with said first area by requesting the highlight of the matching links with the current rule.
- a fourth area (zone 4) listing the pages that are currently not assigned to any node in the sitemap.

Preferably, the process of the present invention defines the selection rule which is automatically formalized under the format of a XPath structure in response to the following process:

- drag and drop of a first link displayed within said first area within said third area;
- drag and drop of a second link within said third area;
- initiating a process for automatically computing and formalizing a XPath structure defining the selection rule.

In one embodiment, the automatic discovery mechanism creating new nodes within the sitemap involves the following steps:

- monitoring the action of the operator to determine from which starting node within said sitemap is to be considered , and pushing said node into a FIFO processing queue Q;
- starting a loop in order to iterate while there are still nodes in the processing queue Q;
- dequeuing from said processing queue the older node being waiting in the queue and processes it as the current one to be processed by the current loop iteration.
- determining the page P being associated with the current node N and applying said selection rule to collect links;
- If node N does not have a page directly associated with it, assigning the considered page P to the parent node;
- starting a loop over each one of the links discovered at step 530;
- checking whether the page corresponding the current link in the loop is already associated to a node existing in the current sitemap in order to minimize the size of the constructed sitemap.

The invention achieves a simple and automated process of constructing a sitemap representation of any pre-existing web site, which can be controlled by an effective user interface, based on drag-and-drop features for controlling the sitemap incorporation of new nodes.
The resulting sitemap still keeps a minimum size thus facilitating the management and the migration of the website.

## Description of the drawings

An embodiment of the process of the invention will now be described, by way of example only, with reference to the accompanying drawings, wherein:

Figure 1 illustrates an hierarchical representation of the overview of a web site which is to be processed with the help of the present invention

Figure 2 illustrates the general process of migration of the considered given web site based on the analysis tool of the present invention.

Figure 3 illustrates the representative tree which is constructed in accordance with the analysis process of the invention, and which is used for facilitating the migration of the given web site.

Figure 4 illustrates the process for creating the site map in accordance with the present invention.

Figure 5 illustrates a detailed diagram of the process in accordance with the present invention which achieves the automatic expansion of the site map.

Figure 6 illustrates a typical example of the different functional zones of the screen which are used in the analysis process.

## Description of the preferred embodiment of the invention

The process and apparatus will be more particularly described in reference with a process for analysing a web site containing a complex structure of pages formalized in a markup language. Clearly, the example will be described in reference with the well known HTML markup format since it is that format which is , nowadays, generalized. However, it is clear that the skilled man will straightforwardly adapt the process to any markup language, and for instance XML-based HTML (XHTML), XML-based User-interface Language (XUL), Wireless Mark-up Language (WML), Extensible Application Mark-up Language (XAML) and more generally any mark-up language which is based on the use of tags within a hierarchical structure.

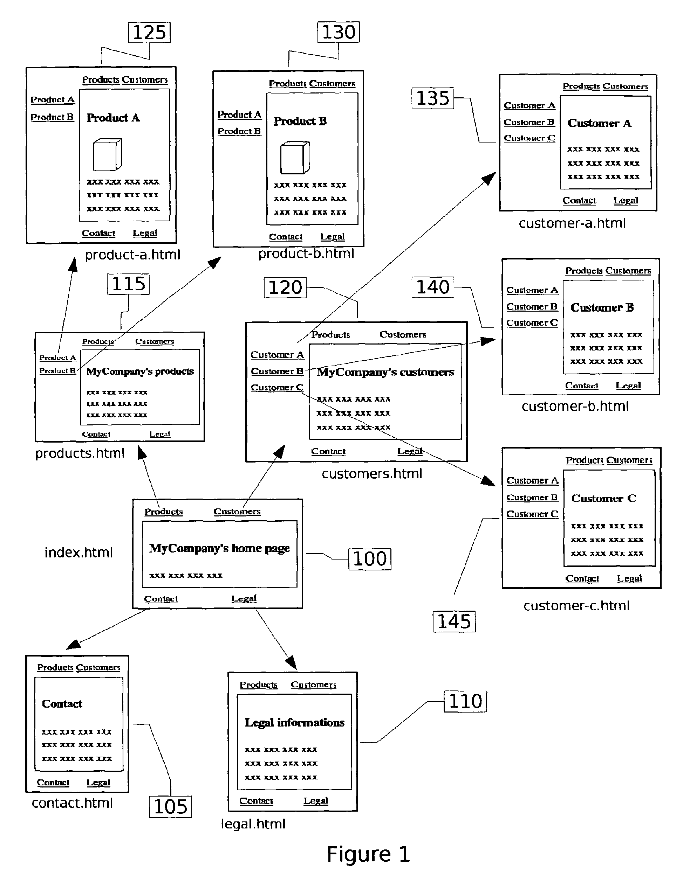

Considering now figure 1, there is illustrated a typical example of a sample web site, candidate for a content migration. There is shown a site homepage 100 which contains 2 menus, a upper and a lower menu. The upper menu contains links to a first page PRODUCTS 115 and to a second page CUSTOMERS 120. The lower menu contains links to a third page CONTACT 105 and to a fourth page LEGAL 110.

Considering now page PRODUCTS 115, it can be seen that the latter contains, in addition to the upper and lower menus described above, a third menu on the left side leading respectively to a page PRODUCT-A 125 and to a page PRODUCT-B 130.

Similarly, in addition to the upper and lower menus already mentioned above, page CUSTOMER 120 comprises a further menu on the left side which respectively leads to page CUSTOMER-A 135, to page CUSTOMER-B 140 and to page CUSTOMER-C 145.

Product X pages contain links in the third menu to navigate through product pages, and Customer X pages contain links to navigate through customer pages.

It can be seen that the arrangement of pages of figure 1 is only a typical example and that the skilled man will straightforwardly arrange the process of the present invention in accordance to any type of organisation, or structures web site.

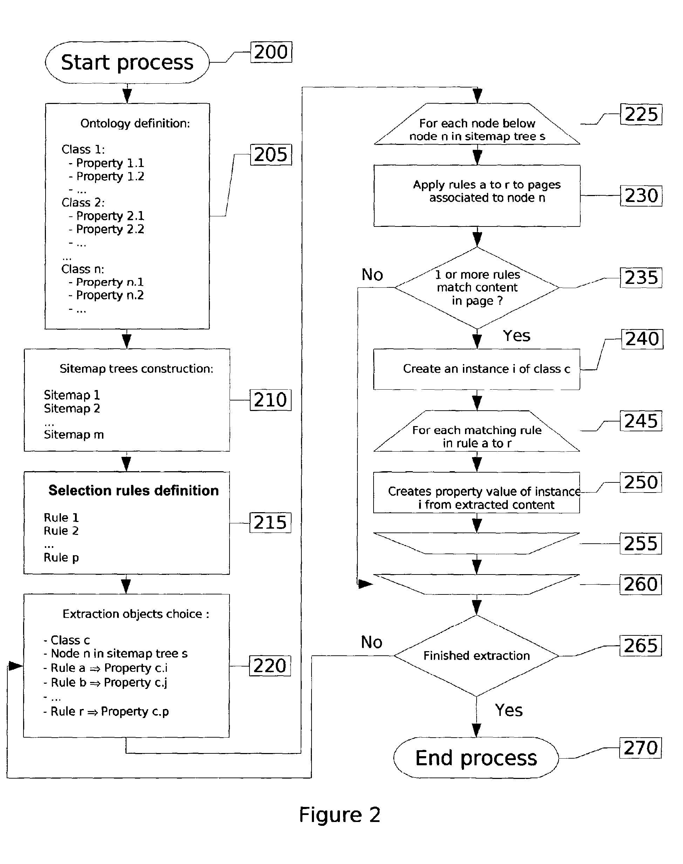

In figure 2, there is now described the overall process for extracting structured information from a given web site, such as the one illustrated in figure 1 and for producing a representative site map. In the context of the present invention, a sitemap is a tree structure that contains part or whole of the site pages. The tree structure is made of nodes, each node having or not associated pages. When a node has several associated pages, those pages represent several language versions of the same content. A page may not appear more than once in a same sitemap.

While it is always possible to represent a Web site as a graph, where a node represents a page and an arc represents a link from one page to another one. However, this representation is not easy to manipulate as it is difficult to isolate a portion of the graph to apply an operation on a set of pages

The present invention takes advantage of the fact that It is more appropriate to represent the site using one or several trees, called sitemaps. A sitemap is a tree graph where a node represents a page or several language versions of a same page. A node might also be created to provide a finer grain in the site structuration and not represent any real page. Some pages may not have a representing node in the sitemap if there is no need to apply automatic processing onto these pages. Once the sitemaps are built, it becomes easy to select a particular node of the sitemap tree to apply the operation to the node's pages and pages from the nodes below.

Constructing a sitemap manually might be a tedious task when performed over a site with many pages. The invention achieves the processing of a a large number of pages at the same time and keep manual adjustments to the minimum.

The general and overall process for constructing a sitemap is illustrated in figure 2, where it can be seen that:

- Building a multi-lingual sitemap requires to build a single language sitemap then apply one the 3 methods below, depending on the construction of the original site:

- if original URLs (web address) holds explicitly the language version (e.g. http://www.mysite.com/fr/xxx.html) is the French version of page http://www.mysite.com/en/xxx.html), then sitemap is updated by applying to each page node a string processing operation to deduce the language version

- if each page contains a link to be clicked to show another language version of the same page, then the operator defines a selection to recognize the language clickable item, then for each node in the sitemap, the associated page is applied the selection rule. The found link, if any, is the address of the language version of the source page

- a sitemap is created for each of the existing languages, each sitemap having the same tree structure, then those sitemaps are superposed to generate a single sitemap with the same structure but each node is associated the pages in all languages

- Defining XHTML/HTML mapping

In order to populate automatically ontology instance data, selection rules are defined to map HTML data content to class properties. Generally speaking, an ontology is a formal way to describe a knowledge domain. Typically, an ontology defines a class for each type of object to be manipulated. A class contains one or more properties that define attributes. A property is defined as having a data type which can be itself a class. Ontology classes are then populated with data called instances.

For instance, the ontology defines a class "product" with a property name, a selection rule is defined to assign the text contained in <h3> tags to the name property of class product.

Several rules with a priority order may be defined to map a same class property. If a rule does not match any content in a page, the next selection rule in priority is then checked

- Apply the mapping to a node of a sitemap
- Given an ontology, with associated selection rules, the operator chooses a node to apply rules to. Rules are applied to every page associated with the selected node or the nodes below it.

With respect to figure 2, there will be now more precisely described the succession of steps which are to be performed in order to achieve extraction of data from any pre-existing web site and, based on the automatic analysing process of step 210 which will be more particularly described in reference with 4 and 5.

The process of figure 2 starts with a step 200.

In a step 205, the operator defines an ontology to represent formally the structure of the data to be extracted. As known by the skilled man, an ontology defines classes of data, each of these classes contains one or more properties to hold values.

As an example, a class C could be a definition of a product, with the properties "title", "reference", "description" and "price". An instance of the class C could have the following property values:

| Property | Value |
| --- | --- |
| Title | Keyboard |
| Reference | KB768 |
| Description | A 102 keys AZERTY keyboard |
| Price | 30 |

Such step is represented in figure 2 for the sake of clarity but it should be noticed that such step is not performed by a computer.

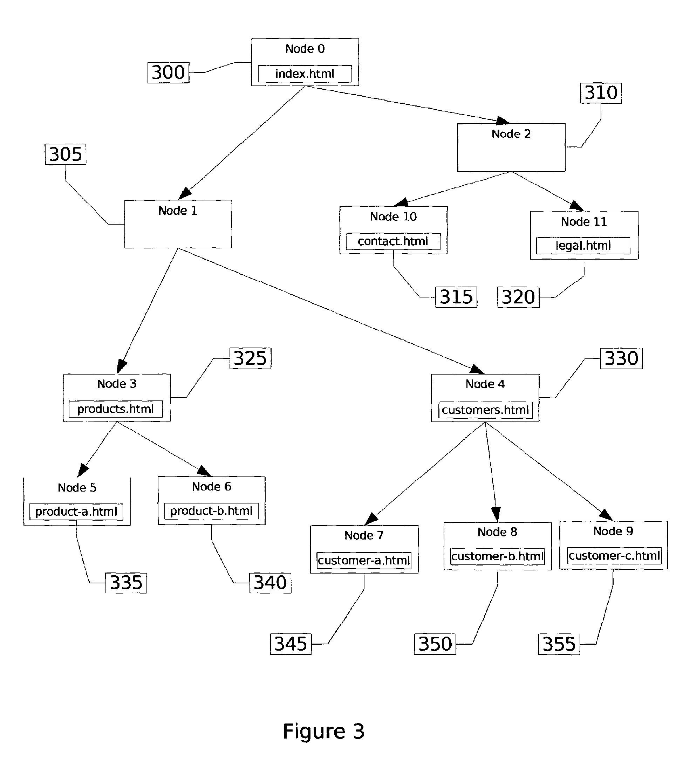

On the contrary, step 210 is basically a computer performed step which assists the user, in a very efficient way, to automatically constructs the site map corresponding to the given website (for instance of figure 1), and which is represented in figure 3.

In a step 215, one or more selection rules are defined. It should be noticed that a selection rule defines a formal way to isolate texts or HTML code portions from an HTML page.

Generally speaking, a selection rule is a formal description of a method to recognize elements within an HTML structure. For instance a rule can have the following descriptions:

- all HTML elements within a <a> tag with attribute "class" set to "mymenuitem"
- all text portions starting with character '>'

A selection rule could be defined as taking the text contained within the HTML tags P that have the "id" attribute set to "pid3".

If the HTML page contains the code:

...

<p id="pid3">A 102 keys AZERTY keyboard</p>

...

The selection rule will isolate the text "A 102 keys AZERTY keyboard".

Note that this particular rule sample could be expressed using the XPath language with the expression: .//p(@id="pid3"] /text()

Another example of selection rule could be to take the digit characters following occurrences of the text "Price: ". If the HTML page contains the text "Price: 30", this selection rule will isolate the text "30".

Note that this particular selection rule could be expressed using the regular expression: Price: (\d+)

The definition of the selection rules in step 215 can be performed manually by the operator, or generated by computer code. Generally speaking, the selection rules could be used for extracting links within pages, or data.

In a step 220, the operator chooses several defined objects to run a selection iteration from:

℟ an ontology class C defined in step [205].

℟ a node N of one the sitemap trees built in step [210]. Note that the chosen node might not be the root node of the selected sitemap tree, but any node within the tree

℟ A set of pairs rule/property, where rules are taken from the ones defined in step [215] and properties from the ones defined in step [205] as properties for the ontology class C

In a step 225, there is started an iteration loop to walk through all nodes below node N in the sitemap tree, including node N itself.

In a step 230, there is applied all the selection rules defined in step 220 to the pages associated with the current sitemap tree node.

In a step 235, one tests whether one or more rules applied above did match any data. If this is not the case, one jumps to step 260 to process the next node. Otherwise, one continues to step 240.

In a step 240, one creates an instance I of the ontology class C.

In a step 245, one starts a loop through all the rules that matched data in step 230.

In a step 250, one assigns the matching data from the selection rule to the associated property as defined in step 220. This data populates the instance I created on step 240.

A step 255 terminates the loop started at step 245

A step 260 terminates the loop started at step 225

In a step 265, the operator decides whether the extraction is completed. If this is not the case, one jumps to step 220 to choose a new set of extraction object to run a new iteration. Otherwise, one proceeds with a step 270 to terminate the extraction operation.

Having described above the overall process for extracting a pre-existing web site by an operator or a user who wishes to achieve migration of such pre-existing for the purpose of further edition, there will now be described in detail the effective automatic analysing tool which is used in the above mentioned process.

The tool which will be described in detail achieves automatic - or semiautomatic construction of a representative site map as shown in figure 3.

It can be seen that node 0 (represented by numeral reference 300) of figure 3 is associated with the site's home page.

Node 1 - represented by reference 305 - is not directly associated to any particular site page. It is indirectly associated to the upper node, ie the site home page. More particularly, as it will be understood herein after, node 1 will be associated the upper menu of the homepage.

Similarly, node 2 - represented by reference 310 - is associated to the lower menu of the homepage.

All other nodes of figure 3 are associated with one corresponding page existing within the web site.

It should be understood that the sitemap of figure 3 is directly related to the complexity of the web site to be analysed for further migration. Clearly, should the web site comprises hundreds or thousands of pages, then the sitemap is likely to include a wide number of nodes and the construction of such sitemap becomes tedious and even unpractical to achieve.

The present invention provides an effective tool for automatically, with very few involvement of the operation, constructing the site map of a predetermined web site.

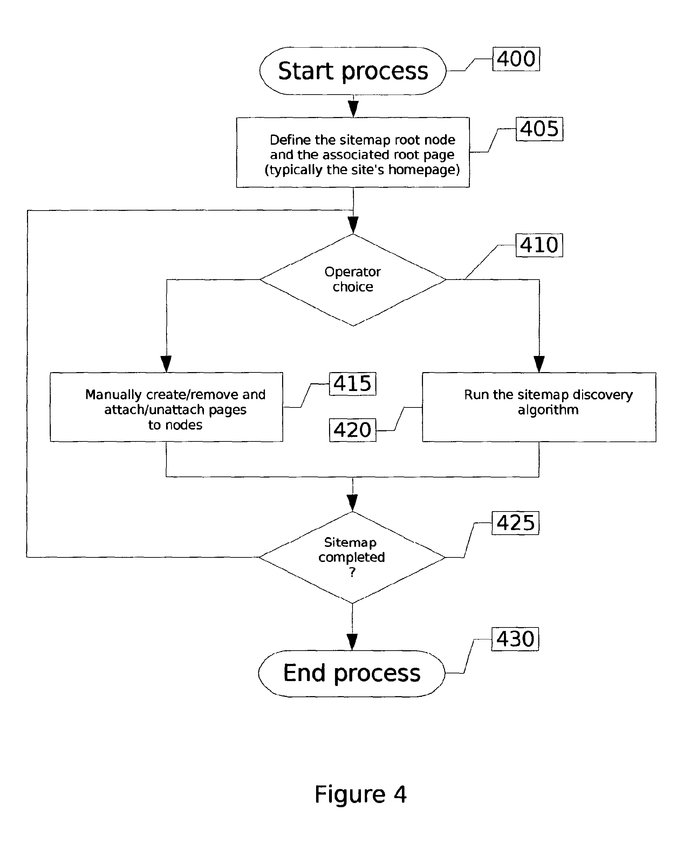

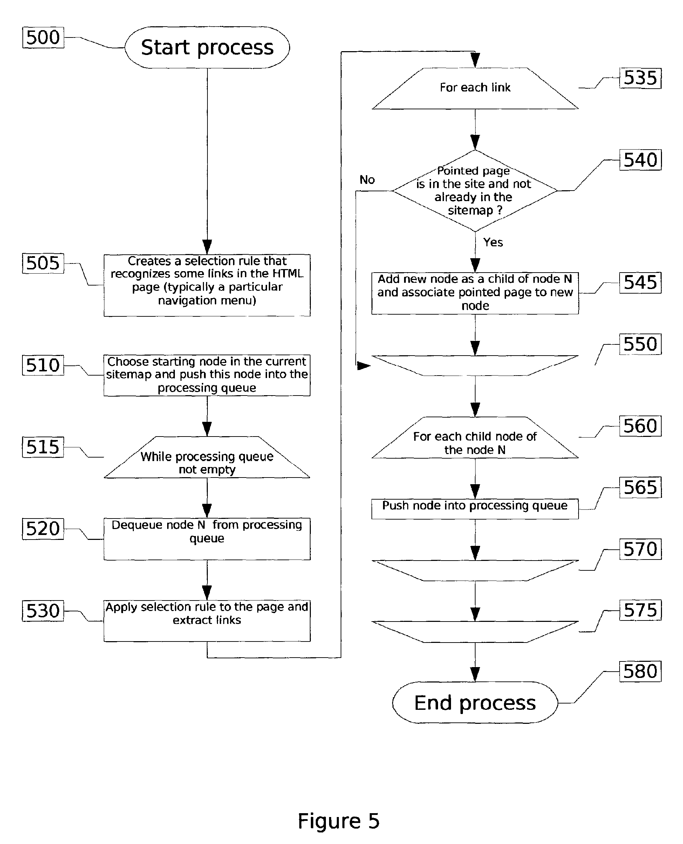

This process will now be described in detail with reference to figures 4 and 5.

The process for creating the sitemap corresponding to the web site of figure 1 starts with a step 400, as shown in figure 4.

In a step 405, the process creates within the site map the first node which is considered as being the root node and associates one particular page which is, generally speaking , the site's home page. In the example of figure 3, the root node is the node 0 referred by reference 300, to which is associated the page "index.html" which represents the Uniform Resource Locator (U.R.L.) of the home page.

To achieve this, the process creates a data structure within the memory of the computer and part of the memory is then allocated to the root node. The creation of a data structure and the allocation of memory for such structure is well known to the skilled man and will not be further developed.

In a step 410, the process performs a test in order to determine the particular action which is requested by the operator (typically a professional well versed within the web edition). Step 410 permits to determine whether, in accordance with the action chosen by the operator, the process further proceeds with manual edition of the site map in a step 415, or an automatic discovery process in a step 420.

Step 415 allows the operator, through an appropriate user interface, to modify the current sitemap by adding or removing nodes, and associating pages to existing nodes, or removing existing page/node associations. It is assumed that the user interface provides such facilities as drag-and-drop functions , special clicking features for easily controlling the creation, the removal and the moving of the nodes within the sitemap. It should be noticed that, once a particular node is created, the user interface of the preferred embodiment permits one particular HTML page to be associated to that newly created node simply by means of a drag-and-drop function as known in the traditional Explorer environment.

Conversely, the user interface also permits the deattaching of one particular page belonging to one node.

Step 420 represents the core of the automatic analysing process of the present invention which achieves automatic discovery or whole or portion of the sitemap tree. Such mechanism shall be more particularly described in figure 5.

In a step 425, the process performs a test to determine whether the sitemap construction process is completed or not. Clearly, when the process reaches this point, the sitemap has grown up, either because the operator has manually created new nodes and attached corresponding pages of the web site (through step 415) or because the sitemap discovery algorithm has achieved creation of additional nodes within the tree structure of the site map. In step 425, the process monitors an action from the operator in order to determine whether the sitemap is complete or not.

If the operator decides that the sitemap is now complete, then process proceeds to step 430 and ends.

If the operator decides that the sitemap still needs to be constructed, the process proceeds back to step 410 for leaving the possibility to either manual or automatic discovery process.

With respect to figure 5 , there will now be described the automatic sitemap discovery process, which starts with a step 500.

In a step 505, the process determines a particular selection rule that recognizes or discover from a given HTML page new links to other pages.

It should be noticed that the invention can employ a wide number of selection rules. Some examples are discussed below.

Generally, an HTML link is contained in the href attribute of HTML tag A. For example the HTML code:

*<a hreh="nextpage.html">Next page </a>*

will display the text "Next page" and will cause the browser to load page "nextpage.html" when the user clicks on the text. For instance, the selection rule defined by the XPath expression: .//td[1]/a/@href will extract all the links located in the first column of a table.

However, some links can be extracted outside of an A HTML tag. As an example, the HTML code:

<div onclick="window.location='nextpage.html'">Next page</div>

will produce the same behaviour as with the A tag example above. A selection rule can be defined to extract the link out of this expression.

As another example, it is a common practice in web pages to separate items in horizontal menus with the character "|". So the corresponding selection rule will take the links defined before or after this character:

| <a href="page1.html">Page 1</a> | <a href="page2.html">Page 2</a> |

In one embodiment, the user interface provides a facility to the user for introducing a particular selection rule.

In another embodiment, the selection rule is automatically computed by the process from an analysis of aligned links in an HTML page and discover nodes which belong to a same hierarchical level within the navigation process. In particular, the invention may advantageously use the process for detecting alignments within an HTML page, or a part of this page, which is disclosed in the European patent application 04368071.9 filed on 3. November 2004 and assigned to the assignee of the present European patent application, and which is herein incorporated by simple reference.

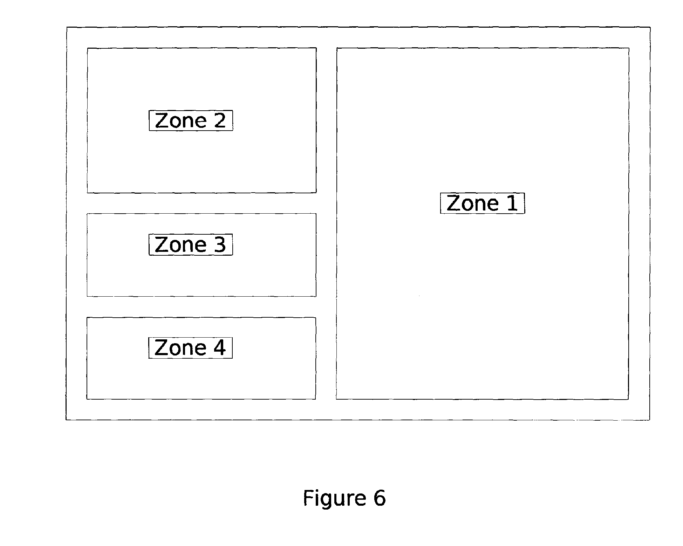

More particularly, the user interface allows the operator to drag and drop two or more links from the Web page to a particular screen area, e.g. zone 1 of figure 6. The computer software will generate the selection rule by detecting all the links that are aligned with 2 more dropped links.

There will be described other examples of determination of selection rules, based on the user interface of figure 6.

Considering back figure 5, it can be seen that, in a step 510, the process monitors the action of the operator to determine from which starting node the discovery process should start. This node is pushed into a FIFO processing queue Q (not represented in the figure for the sake of clarity). Note that using a processing queue to walk through the tree portion allows to make the tree grow transversally rather than "in depth".

The process then proceeds with a step 515, a loop is started to iterate while there are still nodes in the processing queue Q.

In a step 520, the process dequeues from the processing queue the older node being waiting in the queue and processes it as the current one to be process by the current loop iteration.

In a step 530, the process determines the page P which is associated with the current node N and applies the selection rule defined at step 505 to collect links. If node N does not have a page directly associated with it, as it is the case in nodes 1 (305) and 2 (310), the process then considers page P associated to the parent node (node 0 carrying the reference 300).

In a step 535, the process starts a loop over each one of the links discovered at step 530.

In a step 540, the process checks whether the page corresponding the current link in the loop is already associated to a node existing in the current sitemap. In particular the process disregards any link to a URL which is outside of the site. If the link which is considered is assumed to be already part of the current sitemap, the process jumps to a step 550 to terminate the current iteration. Otherwise, the process proceeds to a step 540. The purpose of this step is to ensure that a page does not exist more than once within a sitemap.

It can thus be seen that the invention provides a significant advantage of generating a sitemap representation of the analysed website which still keeps a minimal representation.

If the current page being considered is not already represented in the representative sitemap, then, in a step 545, the process creates a new node N1, as a child of the current node N, and further associates that current page to node N1.

It should be noticed that the site map being constructed keeps very close to the navigation of the site map being analysed. For instance, it can be seen that page "PRODUCT_A" is represented by node 5 (reference 335 in figure 3) and the process does not create a new node which would be a child from node 6 (reference 340 in figure 3) although it can be seen that page "PRODUCT_B" do contains a link towards the page "PRODUCT_A".

The process of the invention clearly performs an effective analysis of the site map being considered, while keeping a minimal representation of the sitemap, translating the main navigation features within the site map. This clearly facilitates the management and the migration of the web site.

In a step 550, the process terminates the loop over discovered links started at step 535

In a step 560, the process starts a loop over the child nodes of node N. Note that each child node may have been created at step 545 in the current iteration or in a previous operation. All the child nodes from the considered node N are being considered, and not only the nodes which were automatically discovered from the automatic discovery process as described above.

In a step 565, the process pushes the current child node into the processing queue Q.

Step 570 terminates the loop over the child nodes started at step 560.

Step 575 terminates the processing queue loop started at step 515 and, eventually, step 580 is the end of the automatic discovery process.

With respect to figure 6, there is shown a preferred embodiment of an user interface which provides effective control of the sitemap construction process of the invention. The screen divided into 4 zones with different purposes.

Zone 1 is a browser view over the site where to extract data from. In addition to behaving as a normal browser, the zone 1 box has the capability to highlight some areas within the displayed Web page. In particular, the zone box can display HTML elements holding links.

The highlighting functionality of the zone 1 is triggered from other functional boxes within the screen.

Zone 2 is a view of the sitemaps being constructed. The displayed method is a classical tree view, similar to a file system explorer as used in many operating system user interfaces.

In particular, each node of the sitemap tree has the capability to expand or collapse itself on a single click from the operator.

A new node can be created by invoking an action on the parent node.

A set of nodes can also be created at once by dragging and dropping a selection from the HTML page displayed in zone 1. In this operation, we consider the links included in the selection corresponding to pages not associated to any node in the current sitemap. The node corresponding to each page is created and appended to dropping target node.

The sitemap discovery algorithm as described in figure 5 can also be run by invoking it from the displayed base node. The selection rule to be used for running the algorithm is the one currently set within the zone 3.

The zone 2 display also shows the pages associated to the sitemap tree nodes.

In an alternative implementation, the page associations are displayed within an additional zone 2a for the currently selected sitemap node.

Zone 3 is used to create selection rules. Zone 3 interacts with zone 1 by requesting the highlight of the matching links with the current rule.

In a particular implementation, zone 3 is used as a drop area when dragging links from zone 1. Each dragged link is considered as a sample and computer code tries to extrapolate dragged samples to define the selection rule.

Zone 4 lists the pages that are currently not assigned to any node in the sitemap. This is particularly useful for completing the sitemap creation as it gives a quick access to parts of the site that are not currently processed.

It should be noticed that such user interface, not only provides effective drag-and-drop facility but is also advantageous for achieving automatic rule selection.

Indeed, in one preferred embodiment, the selection rules are automatically deduced by the software under the form of an XPath expression, from a set of samples provided by the operator.

The operator selects from zone 1 in figure 6 a first element, for example a link element, in the displayed web page and drags this element into zone 3, dedicated to creating selection rules.

From this only sample, zone 3 deduces the selection rule as being the exact XPath expression describing the location of the dragged sample within the HTML page. An example of this XPath expression could be:

$$\text{/html[1]/body[1]/table[2]/tbody[1]/tr[2]/td[3]/div[2]/a[1]}$$

Zone 3 then informs zone 1 of the current selection rule, in order for zone 1 to highlight the matching element within the displayed HTML page.

The operator then selects another element from zone 1 and drags it into zone 3. From those two samples, zone 3 deduces an XPath expression matching the two samples and possibly other elements with similar characteristics. This new XPath expression could be:

$$\text{/html[1]/body[1]/table[2]/tbody[1]/tr[2]/td/div[2]/a[1]}$$

From this new selection rule, zone 3 can instruct zone 1 to highlight all the elements matching the rule. This highlighting operation allows the operator to easily verify that the generated rule matches his expectations.

Alternatively, any other method for detecting correlations between samples and generating extrapolation rules can be used to generate the selection rule.

The representative sitemap which is constructed in accordance with the present invention is appropriate for automatically creating a structured database which is automatically populated with data extracted from the sitemap..

**Claims**

1. Process for automatically analyzing a website comprising a plurality of pages hierarchically arranged and formalized in a markup language, said process comprising the steps of:

    - constructing a sitemap representation of said web site, said sitemap including at least a root node associated with one page of said website,
    - definition of a selection and selection rule for determining a set of links in pages;
    - for each node comprised within said sitemap, discovering a set of links complying with said selection rule;
    - using said discovering for determining new pages and for automatically creating, when appropriate, new nodes within said sitemap being associated with new pages of said web site.

2. Process according to claim 1 **characterized in that** it said selection rule is entered by the operator.

3. Process according to claim 1 **characterized in that** said selection rule uses a process for detecting alignment between links existing within a given page.

4. Process according to claim 3 **characterized in that** said alignment detection process is controlled when the user drags and drop two particular links within an analysed page within one predefined area of the screen.

5. Process according to anyone of the preceding claims **characterized in that** it includes a user interface comprising at least:

    - a first area (zone 1) displaying the browsing of the considered website being analysed;
    - a second area (zone 2) displaying the pages associated to the sitemap tree nodes.
    - a third area (zone 3) using for creating selection rules, and which interacts with said first area by requesting the highlight of the matching links with the current rule.
    - a fourth area (zone 4) listing the pages that are currently not assigned to any node in the sitemap.

6. Process according to claim 4 **characterized in that** said selection rule is automatically formalized under the format of a Xpath structure in response to the following process:

    - drag and drop of a first link displayed within said first area within said third area;
    - drag and drop of a second link within said third area;

- initiating a process for automatically computing and formalizing a Xpath structure defining the selection rule.

7. Process according to anyone of the preceding claims **characterized in that** said links discovery mechanisms involves the following steps:

- monitoring (515) the action of the operator to determine from which starting node within said sitemap is to be considered , and pushing said node into a FIFO processing queue Q;
- starting a loop (515) in order to iterate while there are still nodes in the processing queue Q;
- dequeuing (520) from said processing queue the older node being waiting in the queue and processes it as the current one to be process by the current loop iteration.
- determining (530) the page P being associated with the current node N and applying said selection rule to collect links;
- If node N does not have a page directly associated with it, assigning the considered page P to the parent node;
- starting a loop (535) over each one of the links discovered at step 530;
- checking (540) whether the page corresponding the current link in the loop is already associated to a node existing in the current sitemap in order to minimize the size of the constructed sitemap.

8. Process according to claim 1 **characterized in that** said page is drafted in Hyper Text Markup Language (HTML).

9. Process according to claim 1 **characterized in that** said page is drafted in an XML based markup language.

10. Process according to anyone of the preceding claims **characterized in that** different sitemaps are created for different languages being discovered within the original website, each sitemap having the same tree structure, and wherein the different sitemaps are superposed to generate one single sitemap with the same structure but each node is associated the pages in all languages.

Figure 1

Start process ——[200]

Ontology definition: ——[205]

Class 1:
- Property 1.1
- Property 1.2
- ...
Class 2:
- Property 2.1
- Property 2.2
- ...
...
Class n:
- Property n.1
- Property n.2
- ...

Sitemap trees construction: ——[210]

Sitemap 1
Sitemap 2
...
Sitemap m

**Selection rules definition** ——[215]

Rule 1
Rule 2
...
Rule p

Extraction objects choice : ——[220]

- Class c
- Node n in sitemap tree s
- Rule a ⇒ Property c.i
- Rule b ⇒ Property c.j
- ...
- Rule r ⇒ Property c.p

For each node below node n in sitemap tree s ——[225]

Apply rules a to r to pages associated to node n ——[230]

No    1 or more rules match content in page ? ——[235]

Yes

Create an instance i of class c ——[240]

For each matching rule in rule a to r ——[245]

Creates property value of instance i from extracted content ——[250]

——[255]

——[260]

No    Finished extraction ——[265]

Yes

End process ——[270]

Figure 2

12

Figure 3

Start process — 400

Define the sitemap root node
and the associated root page
(typically the site's homepage) — 405

Operator
choice — 410

Manually create/remove and
attach/unattach pages
to nodes — 415

420 — Run the sitemap discovery
algorithm

Sitemap
completed
? — 425

End process — 430

Figure 4

500 — Start process

535 — For each link

540 — Pointed page is in the site and not already in the sitemap ?

No

Yes

505 — Creates a selection rule that recognizes some links in the HTML page (typically a particular navigation menu)

545 — Add new node as a child of node N and associate pointed page to new node

550

510 — Choose starting node in the current sitemap and push this node into the processing queue

560 — For each child node of the node N

515 — While processing queue not empty

565 — Push node into processing queue

520 — Dequeue node N from processing queue

570

530 — Apply selection rule to the page and extract links

575

580 — End process

Figure 5

Figure 6

**European Patent Office**

**EUROPEAN SEARCH REPORT**

Application Number

EP 06 36 8002

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | TERVEEN L ET AL: "Constructing, organizing, and visualizing collections of topically related Web resources" ACM TRANSACTIONS ON COMPUTER-HUMAN INTERACTION, ACM, NEW YORK, NY, US, vol. 6, no. 1, March 1999 (1999-03), pages 67-94, XP002173294 ISSN: 1073-0516 * abstract * * page 71 - page 83 * * page 87 - page 91 * ----- | 1-10 | INV. G06F17/30 |
| X | US 2002/147805 A1 (LESHEM ERAN [IL] ET AL) 10 October 2002 (2002-10-10) * abstract * * paragraph [0082] - paragraph [0223] * * figures 1-6 * ----- | 1-10 | |
| X | US 6 647 381 B1 (LI WEN-SYAN [US] ET AL) 11 November 2003 (2003-11-11) * abstract * * column 4, line 18 - column 22, line 55 * * figures 1,2,6-9 * ----- | 1-10 | TECHNICAL FIELDS SEARCHED (IPC) G06F |
| X | SAKAIRI T: "A site map for visualizing both a Web site's structure and keywords" SYSTEMS, MAN, AND CYBERNETICS, 1999. IEEE SMC '99 CONFERENCE PROCEEDINGS. 1999 IEEE INTERNATIONAL CONFERENCE ON TOKYO, JAPAN 12-15 OCT. 1999, PISCATAWAY, NJ, USA,IEEE, US, vol. 4, 12 October 1999 (1999-10-12), pages 200-205, XP010362696 ISBN: 0-7803-5731-0 * the whole document * ----- | 1-10 | |

-/--

The present search report has been drawn up for all claims

| Place of search | Date of completion of the search | Examiner |
|---|---|---|
| The Hague | 16 August 2007 | Dumitrescu, Cristina |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**European Patent Office**

**EUROPEAN SEARCH REPORT**

Application Number

EP 06 36 8002

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SIFER M: "A filter co-ordination for exploring multi-classification sitemaps" COORDINATED AND MULTIPLE VIEWS IN EXPLORATORY VISUALIZATION, 2003. PROCEEDINGS. INTERNATIONAL CONFERENCE ON 15 JULY 2003, PISCATAWAY, NJ, USA,IEEE, 2003, pages 117-128, XP010646408 ISBN: 0-7695-2001-4 * the whole document * | 1-10 | |
| A | PILGRIM C J ET AL: "Designing WWW site map systems" DATABASE AND EXPERT SYSTEMS APPLICATIONS, 1999. PROCEEDINGS. TENTH INTERNATIONAL WORKSHOP ON FLORENCE, ITALY 1-3 SEPT. 1999, LOS ALAMITOS, CA, USA,IEEE COMPUT. SOC, US, 1 September 1999 (1999-09-01), pages 253-258, XP010352425 ISBN: 0-7695-0281-4 * the whole document * | 1-10 | |
| A | AMENTO B ET AL: "TOPICSHOP: ENHANCED SUPPORT FOR EVALUATING AND ORGANIZING COLLECTIONS OF WEB SITES" UIST 00. PROCEEDINGS OF THE 13TH. ANNUAL ACM SYMPOSIUM ON USER INTERFACE SOFTWARE AND TECHNOLOGY. SAN DIEGO, CA, NOV. 5 - 8, 2000, ACM SYMPOSIUM ON USER INTERFACE SOFTWARE AND TECHNOLOGY, NEW YORK, NY : ACM, US, 5 November 2000 (2000-11-05), pages 201-209, XP001171608 ISBN: 1-58113-212-3 * page 204 - page 205 * * figure 3 * | 5 | TECHNICAL FIELDS SEARCHED (IPC) |

The present search report has been drawn up for all claims

| Place of search | Date of completion of the search | Examiner |
|---|---|---|
| The Hague | 16 August 2007 | Dumitrescu, Cristina |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 06 36 8002

This annex lists the patent family members relating to the patent documents cited in the above-mentioned European search report.
The members are as contained in the European Patent Office EDP file on
The European Patent Office is in no way liable for these particulars which are merely given for the purpose of information.

16-08-2007

| Patent document cited in search report | | Publication date | Patent family member(s) | | Publication date |
|---|---|---|---|---|---|
| US 2002147805 | A1 | 10-10-2002 | NONE | | |
| US 6647381 | B1 | 11-11-2003 | JP 2001125931 | A | 11-05-2001 |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 04368071 A